# EUROPÄISCHE PATENTSCHRIFT

(11) **EP 0 586 369 B1**
(45) Veröffentlichungstag und Bekanntmachung des Hinweises auf die Patenterteilung: **05.04.1995**
(21) Anmeldenummer: 91909532.3
(22) Anmeldetag: 27.05.1991
(51) Int. Cl.: H02J 3/36

(54) **VERFAHREN UND SCHALTUNGSANORDNUNG ZUR GLEICHSTROMÜBERTRAGUNG**
METHOD AND CIRCUIT FOR DIRECT-CURRENT TRANSMISSION
PROCEDE DE CIRCUIT POUR LA TRANSMISSION DE COURANT CONTINU

(43) Veröffentlichungstag der Anmeldung: 16.03.1994
(73) Patentinhaber: SIEMENS AKTIENGESELLSCHAFT, 80333 München (DE)
(72) Erfinder: KARLECIK-MAIER, Franz, D-8552 Höchstadt (DE)
(86) Internationale Anmeldenummer: DE9100452
(87) Internationale Veröffentlichungsnummer: WO9222118

(56) Entgegenhaltungen:
- EP-A- 0 197 352
- EP-A- 0 321 823
- DE-A- 3 326 947

## Beschreibung

Die Erfindung betrifft ein Verfahren zur Gleichstromübertragung zwischen mindestens einem Gleichrichter und mindestens einem Wechselrichter, sowie eine Schaltungsanordnung zur Gleichstromübertragung.

Zum Übertragen von elektrischer Energie zwischen zwei nicht synchronisierbaren Wechselspannungsnetzen wird von der Gleichstromübertragung gebrauch gemacht. Dabei wird an das eine Wechselspannungsnetz ein Gleichrichter angeschlossen, der einen Gleichstrom erzeugt, welcher einem Wechselrichter zugeführt wird. Dieser ist wiederum mit dem zweiten Wechselspannungsnetz verbunden. Die beiden Wechselspannungsnetze sind dann über eine Gleichstromverbindung miteinander gekoppelt. Eine derartige Anordnung ist z.B. aus der DE-AS 25 18 910 bekannt.

Für den Betrieb derartiger Anordnungen werden unterschiedliche Regelverfahren angewendet. Ein großer Teil der gebräuchlichen Regelverfahren basieren auf dem Marginalstrom-Verfahren. Beim Marginalstrom-Verfahren weisen Gleichrichter und Wechselrichter jeweils einen Stromregler auf, deren Kennlinien um einen Marginalstrom voneinander versetzt sind. Zusätzlich weist bei dieser Verfahrensweise der Wechselrichter einen sogenannten Löschwinkelregler auf. Aus der EP 0 197 352 Al ist eine Ausführung bekannt, die einen Stromregler für den im Gleichrichterbetrieb befindlichen Umrichter und einen Löschwinkelregler für den im Wechselrichterbetrieb befindlichen Umrichter aufweist. Der Stromregler des Gleichrichters erhält dabei als Eingangssignal den Stromsollwert Id*.
Id* sowie der Löschwinkelwert γ* werden von einem Steuer- und Rechenglied erzeugt, welchem Udn, Ido, P, P* und γ (Löschwinkelsignal des Wechselrichters) zugeführt werden.

Beim Marginalstrom-Verfahren bestimmt im stationären Betrieb der Gleichrichter den Gleichstrom und der Wechselrichter die Gleichspannung auf der Übertragungsstrecke. Vom Gleichstromregelkreis des Gleichrichters her betrachtet, kann eine Netzstörung (Drehstromspannungsabsenkung oder -erhöhung) am Wechselrichter vom Löschwinkelregler verstärkt werden. Darüber hinaus hat vom wechselrichterseitigen Netz her betrachtet der Löschwinkelregler ein schlechtes du/dq-Verhalten, weil er einer Drehspannungsveränderung nicht entgegenwirkt. Um dieses unvorteilhafte Verhalten des Löschwinkelreglers im Zusammenhang mit dem Marginalstrom-Verfahren zu eliminieren, werden Gleichspannungsregler eingesetzt, die bei Drehspannungserhöhungen das gewünschte Verhalten aufweisen. Die Gleichspannungsregler verschlechtern jedoch den Wirkungsgrad der Gleichstromübertragung.

Der Erfindung liegt die Aufgabe zugrunde ein Verfahren und eine Schaltungsanordnung anzugeben, bei der die obengenannten Nachteile vermieden werden.

Die Aufgabe wird erfindungsgemäß mit einem Verfahren gemäß Anspruch 1 gelöst.

Der Erfinder hat erkannt, daß die beim Marginalstrom-Verfahren vorgesehene Funktionsaufteilung, nämlich daß im Normalbetrieb der Gleichstrom vom Gleichrichter und die Gleichspannung vom Wechselrichter bestimmt wird, ungünstig ist. Darüberhinaus hat der Erfinder festgestellt, daß der Löschwinkelregler am Wechselrichter eine wesentliche Ursache für die obengenannten Nachteile sind.

Die hier vorgeschlagene Lösung geht demgegenüber einen anderen Weg. Der Steuerwinkel für den Gleichrichter wird im stationären Betrieb in Abhängigkeit vom Löschwinkel bestimmt. Der Gleichrichter bestimmt im stationären Betrieb immer die Gleichspannung, während der Wechselrichter den Gleichstrom bestimmt. Durch die erfindungsgemäße Lösung werden Reglerablösungen im quasistationären Betrieb vermieden.

Eine bevorzugte Ausführung des Verfahrens ist in einer Kombination der Ansprüche 1 bis 7 gegeben. Dabei wird der Gleichrichter bei transienten Betriebszuständen, z. B. beim Anlauf und/oder im Fehlerfall, von einem Stromregler angesteuert. Dies gilt, wenn z.B. kein Löschwinkel-Istwert vorhanden ist oder wenn der Löschwinkel-Istwert Null ist. Durch die gewählte Struktur des Regelkonzeptes ergeben sich keine Reglerablösungen im quasistationären Betrieb. Der als Löschwinkelregler wirkende Regler des Gleichrichters wirkt dem Stromregler des Wechselrichters nicht mehr entgegen, wodurch er eine bessere Dynamik erhalten kann. Auf diese Weise kann die Gesamtdynamik der Gleichstromübertragung verbessert werden. Da keine Reglerablösungen im quasistationären Betrieb auftreten und ein vorteilhaftens du/dq-Verhalten gegeben ist, kann das vorgeschlagene Verfahren nicht nur bei starren Netzen, sondern auch in vorteilhafter Weise bei schwachen Netzen eingesetzt werden.

Eine weitere Lösung der obengenannten Aufgabe ist in Anspruch 8 angegeben. Zusätzliche vorteilhafte Ausgestaltungen ergeben sich nach den übrigen Ansprüchen. Alle angegebenen Lösungen eignen sich insbesondere für eine Hochspannungsgleichstromübertragung (HGÜ).

Ausführungsbeispiele und Vorteile der Erfindung werden nachfolgend anhand der Zeichnung bespielhaft näher erläutert. Es zeigen:
- FIG 1: eine Schaltungsanordnung zur Gleichstromübertragung,
- FIG 2: eine Schaltungsanordnung nach FIG 1 mit einem Auswähler für den Anfahr- oder Fehlerfall,
- FIG 3: eine Weiterbildung der Schaltungsanordnung nach FIG 2, und
- FIG 4: ein Diagramm zur Schaltungsanordnung nach FIG 3.

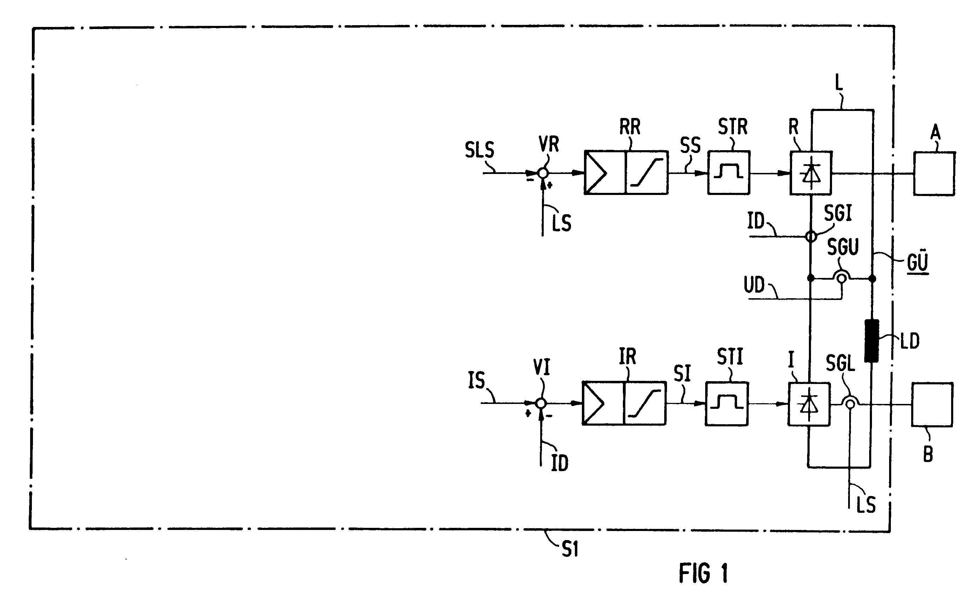

In der in FIG 1 gezeigten Schaltungsanordnung S1 sind zwei elektrische Netze A, B zu sehen, die über eine Gleichstromübertragung GÜ elektrisch miteinander verbunden sind. Die Netze A, B sind dabei als Dreh- oder Wechselspannungsnetze ausgebildet, welche aus technischen Gründen nicht direkt miteinander verbunden werden können oder sollen. Das Netz A ist dazu an einen Gleichrichter R (rectifier) angeschlossen. Der Gleichrichter R führt die Gleichrichtung der vom Netz A gelieferten Wechselenergie durch. Die Ausgänge des Gleichrichters R sind über Gleichstromleitungen L mit einem Wechselrichter I (inverter) verbunden. Dieser führt eine Wechselrichtung des vom Gleichrichter R gelieferten Gleichsignals durch, das dann dem Netz B zugeführt wird. Der Gleichrichter R und der Wechselrichter I sind bevorzugt als mehrpulsige Brückenschaltung mit Thyristoren, GTO′s oder sonstigen steuerbaren Ventilen, aufgebaut.

Zur Dämpfung von Oberschwingungen auf den Gleichstromleitungen L weisen diese beispielhaft eine Glättungsinduktivität LD auf. An den Gleichstromleitungen L sind des weiteren Signalgeber SGI, SGU für ein Stromsingal ID bzw. für ein Spannungssignal UD der Gleichstromübertragung GÜ vorgesehen. Ein weiterer Signalgeber SGL ist wechselspannungsseitig am Wechselrichter I angeordnet, der zum Erfassen eines Löschwinkelsignals LS dient. Dem Gleichrichter R und dem Wechselrichter I sind eingangsseitig jeweils ein Steuergerät STR bzw. STI zugeordnet, welche für die Zündimpulsaufbereitung dienen.

Das Steuergerät STR des Gleichrichters R erhält ein Steuersignal SS von einem Gleichrichterregler RR, welchem als Eingangsgröße ein Löschwinkelsignal LS zugeführt wird. Vor der Verwendung als Eingangsgröße (Regelgröße) wird das Löschwinkelsignal LS in einem ersten Vergleicher VR mit einem Sollöschwinkel SLS verglichen. Der Gleichrichterregler RR kann dabei einen Verstärker, einen Begrenzer sowie auch den Vergleicher VR umfassen.

Der Wechselrichter I weist ebenfalls eine Reihenschaltung bestehend aus einem zweiten Vergleicher VI einem Wechselrichterregler IR und dem Steuergerät STI zur Ansteuerung auf. Dabei wird dem zweiten Vergleicher VI als Eingangsgrößen ein Sollstrom IS und das Stromsignal ID der Gleichstromübertragung GÜ zugeführt. Im Wechselrichterregler IR wird dann aus der resultierenden Eingangsgröße das entsprechende Steuersignal SI für das Steuergerät STI erzeugt.

Mit dieser Schaltungsanordnung bestimmt der Gleichrichter R im stationären Betrieb immer die Gleichspannung auf der Gleichstromübertragung GÜ, während der Wechselrichter I immer den Gleichstrom bestimmt. Das Steuersignal SS für den Gleichrichter R wird dabei nur vom Gleichrichterregler RR bestimmt, welcher in Abhängigkeit vom Löschwinkelsignal LS arbeitet. Diese Ausführungsvariante zeichnet sich durch ihre Einfachheit aus, bei der eine Kombination mit anderen Regelverfahren möglich ist. Die Steuersignale SS, SI enthalten im wesentlichen die Information über den Steuerwinkel für die Umrichterventile.

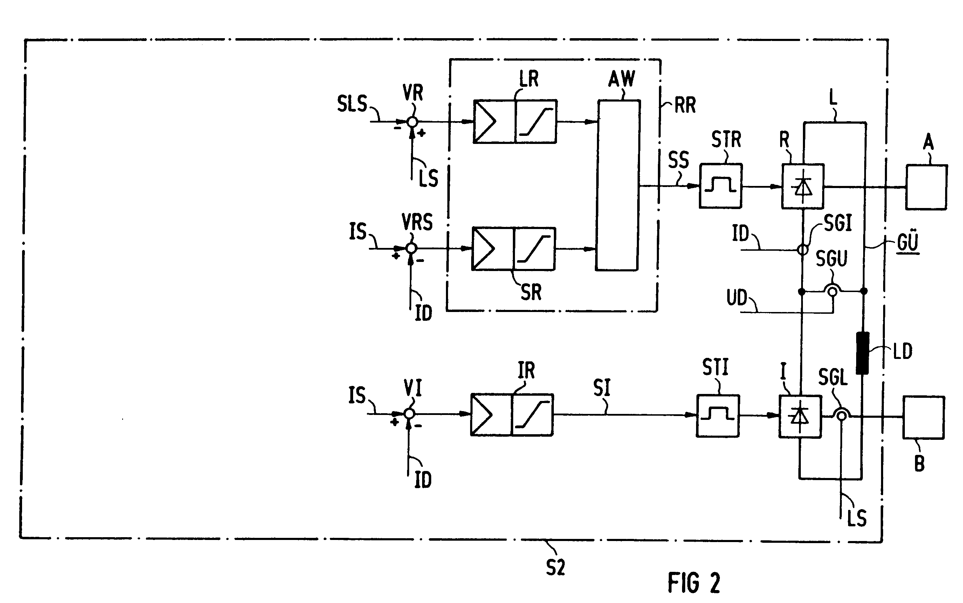

Bei der in FIG 2 gezeigten Schaltungsanordnung S2 weist der Gleichrichterregler RR einen Löschwinkelregler LR und einen Stromregler SR auf, wobei ein Eingang des Löschwinkelreglers LR mit dem Ausgang des ersten Vergleichers VR und der Eingang des Stromreglers SR mit dem Ausgang eines dritten Vergleichers VRS verbunden sind. Den Vergleichern VR und VRS werden die zugeordneten Soll- und Istwertsignale LS und SLS bzw. ID und IS als Eingangsgrößen zugeführt. Die Ausgänge vom Löschwinkelregler LR und vom Stromregler SR sind dabei auf einen Auswähler AW geführt. Dieser hat die Aufgabe, für einen vorgegebenen Betriebsfall das entsprechende Steuersignal SR an das Steuergerät STR weiterzuleiten. Dabei wird im stationären Betrieb das Ausgangssignal des Löschwinkelreglers LR an das Steuergerät STR weitergeleitet. Für den Fehlerfall oder für die Anlaufphase der Gleichstromübertragung GÜ, also wenn noch kein oder ein "lückender" Strom auf den Gleichstromleitungen L fließt, kommt der Stromregler SR zum Eingriff. Der Auswähler AW kann auch alternativ derart ausgebildet sein, daß er direkt auf die Regler oder auf deren Eingangsgrößen einwirkt. Wesentlich ist jedoch, daß lediglich nur ein Regler auf den Gleichrichter R einwirkt. Mit der Schaltungsanordnung S2 ist bei transienten Betriebszuständen, insbesondere beim Anlauf und im Fehlerfall, ein verbesserter Betrieb möglich. Das dynamische Verhalten wird dabei wesentlich verbessert.

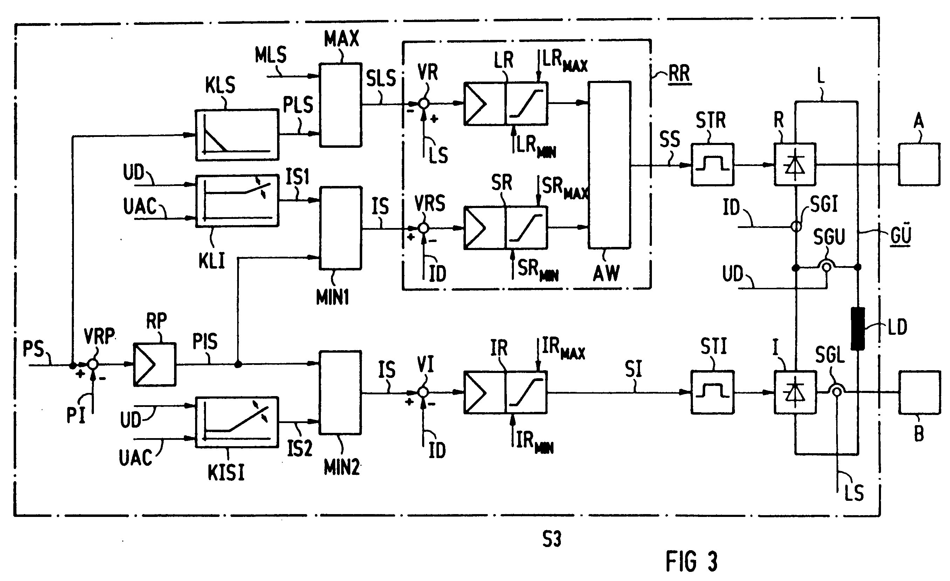

Die in der FIG 3 gezeigte Schaltungsanordnung S3 stellt eine bevorzugte Ausführung dar. Der wesentliche Unterschied der Schaltunganordnung S3 gegenüber der in FIG 2 gezeigten Schaltungsanordnung S2 liegt darin, daß die Aufbereitung der Sollwerte näher dargestellt ist.

Ausgehend von einem vorgebbaren Leistungssollwert PS wird dieser einem ersten Kennliniengeber KLS zugeführt, in welchem ein leistungsabhängiger Sollöschwinkel PLS gebildet wird. Dieser wird zusammen mit einem minimalen Löschwinkelsollwert MLS einem Maxiumwähler MAX zugeführt, welcher das Signal mit der höheren Amplitude als Sollöschwinkel SLS dem Vergleicher VR zuführt. Parallel dazu wird der Leistungssollwert PS auf einen vierten Vergleicher VRP gegeben, dessen zweiten Eingang ein Leistungsistwert PI der Gleichstromübertragung GÜ zugeführt wird. Dieser kann beispielsweise aus den Meßwerten UD und ID gebildet sein. Der Ausgang des vierten Vergleichers VRP ist mit einem Leistungsregler RP verbunden, dessen Ausgang einen leistungsabhängigen Stromsollwert PIS liefert. In Abhängigkeit von der Spannung UD der Gleichstromübertragung GÜ und einer Wechselspannung UAC (wahlweise von Netz A oder B) wird in einem zweiten Kennliniengeber KLI ein erster, weiterer Stromsollwert IS gebildet, der einem Eingang eines ersten Minimumwählers MINl zugeführt wird. Der zweite Eingang erhält den leistungsabhängigen Stromsollwert PIS. Das jeweils minimale Signal wird vom Minimumwähler MINl dem zweiten Vergleicher VRS als Stromsollwert IS zugeführt.

Die hier verwendeten Kennliniengeber sind allgemein bekannt. Mit ihrer Hilfe kann die Kennlinie einer Eingangsgröße mit vorgegeben Parametern oder in Abhängigkeit von weiteren Eingangsgrößen verändert werden. Die Kennliniengeber dienen vorliegend insbesondere zur Anpassung an die kundenspezifischen Gegebenheiten einer Anlage im Einzelfall. Die in FIG 3 gezeigten Signalverläufe in den Kennliniengebern KLS, KIS, KISI gelten daher nur beispielhaft für einen speziellen Anwendungs fall.

Der leistungsabhängige Stromsollwert PIS wird des weiteren einem zweiten Minimumwähler MIN2 zugeführt. In Abhängigkeit von der Spannung UD der Gleichstromübertragung GÜ und der Wechselspannung UAC wird in einem dritten Kennliniengeber KISI aus dem leistungsabhänigen Stromsollwert PIS ein zweiter weiterer Stromsollwert IS2 gebildet, der dem zweiten Eingang des Minimumwählers MIN2 zugeführt ist. Der Minimumwähler MIN2 wählt zwischen den an seinen Eingängen anliegenden Signalen das minimale Signal aus und führt dies als Stromsollwert IS dem dritten Vergleicher VI zu. Der übrige Schaltungsaufbau sowie der Signalverlauf entspricht dem in FIG 2.

Die aufgezeigte Verfahrensweise, sowie der ergänzende Schaltungsaufbau erlauben einen verbesserten Betrieb von Gleichstromübertragungen. Dies gilt insbesondere für die Anwendung bei Hochspannungsgleichstromübertragungen (HGÜ-Anlagen), die als Kurzkupplung ausgeführt sind. Ist eine zusätzliche Signalübertragung vorhanden, so ist ein Anwendung auch bei langen Übertragungstrecken anwendbar.

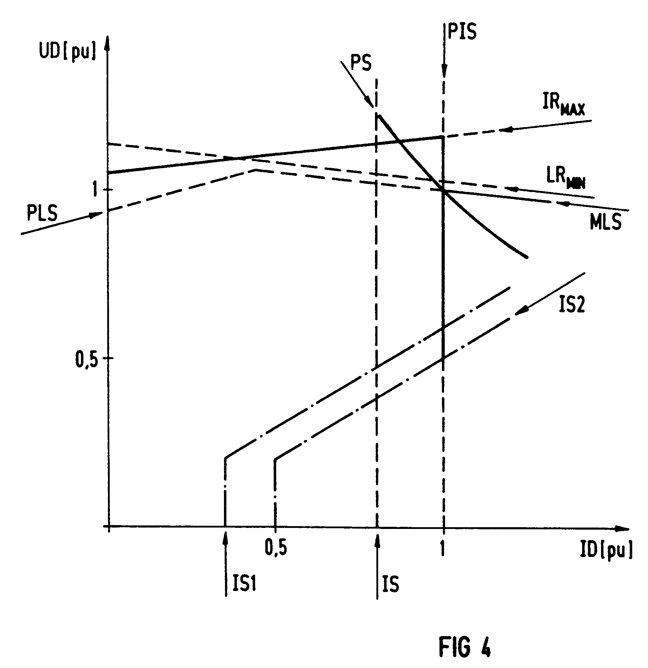

Das in FIG 4 gezeigte Diagramm zeigt die stationären Charakteristiken des Verfahrens im UD/UI-Diagramm. Dem Diagramm ist zu entnehmen, daß im stationären Betrieb der Gleichrichter R die Spannung UD und der Wechselrichter I den Strom ID bestimmt. Für den Fehlerfall und für den Anlauf weist der Gleichrichter R zusätzlich eine strombestimmende Charakteristik auf. Reglerablösung im quasistationären Betrieb treten weitgehend nicht mehr auf. Die Realisierung des Vefahrens ist mit der angegebenen Schaltungsanordnung oder auch als Programm in einem Rechner möglich.

## Patentansprüche

1. Verfahren zur Gleichstromübertragung zwischen mindestens einem Gleichrichter (R) und mindestens einem Wechselrichter (I), bei dem einem Gleichrichterregler (RR) als Eingangssignal ein Löschwinkelsignal (LS) des Wechselrichters (I) und einem Wechselrichterregler (IR) als Eingangssignal ein Stromsignal (ID) der Gleichstromübertragung (GÜ) zugeführt wird.

2. Verfahren nach Anspruch 1, bei dem dem Gleichrichterregler (RR) für transiente Betriebszustände als zusätzliches Eingangssignal ein Stromsignal (ID) der Gleichstromübertragung (GÜ) zugeführt wird, wobei ein Auswähler (AW) die jeweilige Regelart, nämlich Regelung in Abhängigkeit vom Löschwinkelsignal (LS) oder Regelung in Abhängigkeit vom Stromsignal (ID), für den Gleichrichter (R) wirksam schaltet.

3. Verfahren nach Anspruch 2, bei dem der Gleichrichterregler (RR) für die transienten Betriebszustände zwei Regelarten mit einem Löschwinkelregler (LR) und einen Stromregler (SR) umfaßt, denen die jeweilige Führungsgröße zugeführt wird, wobei der Auswähler (AW) zwischen den Ausgängen der beiden Regler (LR,SR) auswählt.

4. Verfahren nach Anspruch 2 oder 3, bei dem das Stromsignal (ID) der Gleichstromübertragung (GÜ) für den Wechselstromregler (IR) dem Stromsignal (ID) der Gleichstromübertragung (GÜ) des Gleichrichterreglers (RR) entspricht.

5. Verfahren nach einem der Ansprüche 1 bis 4, bei dem das Stromsignal (ID) der Gleichstromübertragung (GÜ) vor seiner Verwendung als Eingangsgröße für den Gleichrichterregler (RR) mit einem Sollstrom (IS) verglichen wird, welcher in Abhängigkeit von einer auf der Gleichstromübertragung (GÜ) zu übertragenden Leistung (PS) gebildet wird.

6. Verfahren nach einem der Ansprüche 1 bis 5, bei dem das Löschwinkelsignal (LS) vor seiner Verwendung als Eingangsgröße mit einem Löschwinkelsollwert (SLS) verglichen wird, welcher in Abhängigkeit von einer zu übertragenden Leistung (PS) der Gleichstromübertragung (GÜ) gebildet ist.

7. Schaltungsanordnung zur Gleichstromübertragung mit einem Gleichrichter (R) zum Erzeugen eines Gleichstromes (ID) aus einem Wechselstrom, der gleichstromseitig mit einem Wechselrichter (I) verbunden ist, der aus dem Gleichstrom (ID) einen Wechselstrom bildet, wobei ein Eingang eines Gleichrichterreglers (RR) für den Gleichrichter (R) mit einem ein Löschwinkelsignal (LS) führenden Signalgeber (SGL) des Wechselrichters (I) und ein Eingang eines Wechselrichterreglers (IR) für den Wechselrichter (I) mit einem ein Stromsignal (ID) der Gleichstromübertragung (GÜ) führenden Signalgeber (SGI) verbunden ist.

8. Schaltungsanordnung nach Anspruch 7, bei der der Gleichrichterregler (RR) einen Löschwinkelregler (LR) und einen Stromregler (SR) umfaßt, wobei ein Eingang des Löschwinkelreglers (LR) den ersten Eingang des Gleichrichterreglers (RR) bildet, und ein Eingang des Stromreglers (SR) einen zweiten Eingang des Gleichrichterreglers (RR) bildet, welcher mit einem Signalgeber (SGI) für ein Stromsignal (ID) der Gleichstromübertragung (GÜ) verbunden ist, und wobei ein Auswähler (AW) den jeweiligen Regler (LR,SR) des Gleichrichterreglers (RR) wirksam schaltet.

9. Schaltungsanordnung nach Anspruch 8, bei dem der Auswähler (AW) an die Ausgänge des Löschwinkelreglers (LR) und des Stromreglers (SR) geschaltet ist und für eine vorgegebene Regelart einen der beiden Ausgänge zu einer Steuereinrichtung (STR) des Gleichrichters (R) weiterschaltet.

10. Schaltungsanordnung nach einem der Ansprüche 7 bis 9, bei der der Signalgeber (SGI) für das Stromsignal (ID) der Gleichstromübertragung (GÜ) für den Wechselrichterregler (IR) dem Signalgeber (SGI) für das Stromsignal (ID) der Gleichstromübertragung (GÜ) des Gleichrichterreglers (RR) entspricht.

11. Schaltunganordnung nach einem der Ansprüche 7 bis 10, bei der der Eingang des Löschwinkelreglers (LR) mit einem erstem Vergleicher (VR) verbunden ist, auf dessen Eingänge das Löschwinkelsignal (LS) und ein Sollöschwinkel (SLS) geführt sind.

12. Schaltungsanordnung nach einem der Ansprüche 7 bis 11, bei der der Eingang des Stromreglers (SR) des Gleichrichters (R) einen zweiten Vergleicher (VRS) aufweist, dessen Eingängen ein Stromsignal (ID) der Gleichstromübertragung (GÜ) und ein Sollstrom (IS) zugeführt sind, wobei der Stromsollwert (IS) in Abhängigkeit von einer auf der Gleichstromübertragung (GÜ) zu übertragenden Leistung (PS) gebildet ist.

13. Schaltunganordnung nach einem der Ansprüche 7 bis 12, bei der die Gleichstromübertragung (GÜ) als Hochspannungsgleichstromübertragung ausgebildet ist.

## Claims

1. A method of d.c. transmission between at least one rectifier (R) and at least one inverter (I), wherein a rectifier regulator (RR) is supplied with an extinction angle signal (LS) of the inverter (I) as input signal and an inverter regulator (IR) is supplied with a current signal (ID) of the d.c. transmission (GÜ) as input signal.

2. A method as claimed in Claim 1, wherein the rectifier regulator (RR) for transient operating states is supplied with a current signal (ID) of the d.c. transmission (GÜ) as additional input signal, where a selector (AW) activates the respective type of regulation, namely regulation as a function of the extinction angle signal (LS) or regulation as a function of the current signal (ID), for the rectifier (R).

3. A method as claimed in Claim 2, wherein the rectifier regulator (RR) for the transient operating states comprises two types of regulation with an extinction angle regulator (LR) and a current regulator (SR), which are supplied with the respective reference variable, where the selector (AW) selects between the outputs of the two regulators (LR, SR).

4. A method as claimed in Claim 2 or 3, wherein the current signal (ID) of the d.c. transmission (GÜ) for the alternating current regulator (IR) corresponds to the current signal (ID) of the d.c. transmission (GÜ) of the rectifier regulator (RR).

5. A method as claimed in one of Claims 1 to 4, wherein the current signal (ID) of the d.c. transmission (GÜ), prior to its use as input variable for the rectifier regulator (RR), is compared with a setpoint current (IS) which is formed as a function of a power (PS) to be transmitted on the d.c. transmission (GÜ).

6. A method as claimed in one of Claims 1 to 5, wherein the extinction angle signal (LS), prior to its use as input variable, is compared with an extinction angle setpoint value (SLS) which is formed as a function of a power (PS), to be transmitted, of the d.c. transmission (GÜ).

7. A circuit arrangement for d.c. transmission with a rectifier (R) for the generation of a direct current (ID) from an alternating current, which rectifier is connected on the d.c. side to an inverter (I) which forms an alternating current from the direct current (ID), where an input of a rectifier regulator (RR) for the rectifier (R) is connected to a signal generator (SGL) of the inverter (I) which conducts an extinction angle signal (LS), and an input of an inverter regulator (IR) for the inverter (I) is connected to a signal generator (SGI) which conducts a current signal (ID) of the d.c. transmission (GÜ).

8. A circuit arrangement as claimed in Claim 7, wherein the rectifier regulator (RR) comprises an extinction angle regulator (LR) and a current regulator (SR), where an input of the extinction angle regulator (LR) forms the first input of the rectifier regulator (RR), and an input of the current regulator (SR) forms a second input of the rectifier regulator (RR), which latter is connected to a signal generator (SGI) for a current signal (ID) of the d.c. transmission (GÜ), and where a selector (AW) activates the respective regulator (LR,SR) of the rectifier regulator (RR).

9. A circuit arrangement as claimed in Claim 8, wherein the selector (AW) is connected to the outputs of the extinction angle regulator (LR) and the current regulator (SR) and for a predetermined type of regulation switches one of the two outputs to a control device (STR) of the rectifier (R).

10. A circuit arrangement as claimed in one of Claims 7 to 9, wherein the signal generator (SGI) for the current signal (ID) of the d.c. transmission (GÜ) for the inverter regulator (IR) corresponds to the signal generator (SGI) for the current signal (ID) of the d.c. transmission (GÜ) of the rectifier regulator (RR).

11. A circuit arrangement as claimed in one of Claims 7 to 10, wherein the input of the extinction angle regulator (LR) is connected to a first comparator (VR), the inputs of which are supplied with the extinction angle signal (LS) and a setpoint extinction angle (SLS).

12. A circuit arrangement as claimed in one of Claims 7 to 11, wherein the input of the current regulator (SR) of the rectifier (R) comprises a second comparator (VRS), the inputs of which are supplied with a current signal (ID) of the d.c. transmission (GÜ) and a setpoint current (IS), where the setpoint current value (IS) is formed as a function of a power (PS) to be transmitted on the d.c. transmission (GÜ).

13. A circuit arrangement as claimed in one of Claims 7 to 12, wherein the d.c. transmission (GÜ) is designed as a high-voltage d.c. transmission.

## Revendications

1. Procédé pour la transmission d'un courant continu entre au moins un redresseur (R) et au moins un onduleur (I), selon lequel un signal d'angle d'extinction (LS) de l'onduleur (I) est envoyé en tant que signal d'entrée à un régulateur (RR) du redresseur, et un signal de courant (ID) du transformateur de courant continu (GÜ) est envoyé à un régulateur (IR) de l'onduleur.

2. Procédé suivant la revendication 1, selon lequel un signal de courant (ID) du transformateur (GÜ) de courant continu est envoyé en tant que signal d'entrée supplémentaire au régulateur (RR) du redresseur pour des états de fonctionnement transitoires, auquel cas un sélecteur (AW) active le type de régulation respectif, à savoir la régulation en fonction du signal de l'angle d'extinction (LS) ou la régulation en fonction du signal de courant (ID), pour le redresseur (R).

3. Procédé suivant la revendication 2, selon lequel le régulateur (RR) du redesseur comprend, pour les états de fonctionnement transitoires, deux types de régulation avec un régulateur (LR) de l'angle d'extinction et un régulateur de courant (SR) , auquel est envoyée la grandeur pilote respective, le sélecteur (AW) réalisant une sélection entre les sorties des deux régulateurs (LR,SR).

4. Procédé suivant la revendication 2 ou 3, selon lequel le signal de courant (ID) du transformateur (GÜ) de courant continu pour le régulateur (IR) du courant alternatif correspondant au signal de courant (ID) du transformateur (GÜ) du courant continu du régulateur (RR) du redresseur.

5. Procédé suivant l'une des revendications 1 à 4, selon lequel le signal de courant (ID) du transformateur de courant continu (GÜ) est comparé, avant son utilisation en tant que grandeur d'entrée pour le régulateur (RR) du redresseur, à un courant de consigne (S) , qui est formé en fonction d'une puissance (PS) devant être transmise au transformateur de courant continu (GÜ).

6. Procédé suivant l'une des revendications 1 à 5, selon lequel le signal d'angle d'extinction (LS) est comparé, avant son utilisation en tant que grandeur d'entrée, à une valeur de consigne de l'angle d'extinction (SLS), qui est formée en fonction d'une puissance (PS) , qui doit être transmise, du transformateur de courant continu (GÜ).

7. Montage pour la transmission d'un courant continu, comportant un redresseur (R) servant à produire le courant continu (ID) à partir d'un courant alternatif, qui est relié, du côté du courant continu, à un ondulateur (I), qui forme un courant alternatif à partir du courant continu (ID), une entrée d'un régulateur (RR) pour le redresseur (R) étant reliée à un générateur de signaux (SGL), qui délivre le signal d'angle d'extinction (LS), de l'onduleur (I), tandis qu'une entrée d'un régulateur pour l'onduleur (IR) est reliée à un générateur de signaux (SGI), qui envoie un signal de courant (ID) au transformateur de courant continu (GÜ).

8. Montage suivant la revendication 7, dans lequel le régulateur (RR) du redresseur comprend un régulateur (LR) de l'angle d'extinction et un régulateur de courant (SR), et dans lequel une entrée du régulateur de l'angle d'extinction (LR) forme la première entrée du régulateur (RR) du redresseur, tandis qu'une entrée du régulateur de courant (SR) forme une seconde entrée du régulateur (RR) du redresseur, qui est reliée à un générateur de signaux (SGI) servant à délivrer un signal de courant (ID) du transformateur de courant continu (GÜ), et un sélecteur (AW) active le régulateur respectif (LR,SR) du régulateur (RR) du redresseur.

9. Montage suivant la revendication 8, dans lequel le sélecteur (AW) est raccordé aux sorties du régulateur de l'angle d'extinction (LR) et du régulateur de courant (SR) et, pour un type de régulation prédéterminé, retransmet l'un des deux signaux de sortie à un dispositif de commande (STR) du redresseur (R).

10. Montage suivant l'une des revendications 7 à 9, dans lequel le générateur de signaux (SGI) pour le courant de signal (ID) du transformateur de courant continu (GÜ) pour le régulateur (IR) de l'onduleur correspond au générateur de signaux (SGI) pour le signal de courant (ID) du transformateur de courant continu (GÜ) du régulateur (R) du redresseur.

11. Montage suivant l'une des revendications 7 à 10, dans lequel l'entrée du régulateur de l'angle d'extinction (LR) est reliée à un premier comparateur (VR), aux entrées duquel sont envoyés le signal d'angle d'extinction (LS) et un angle d'extinction de consigne (SES).

12. Montage suivant l'une des revendications 7 à 11, dans lequel l'entrée du régulateur de courant (SR) du redresseur (R) comporte un second comparateur (VRS), aux entrées duquel sont envoyés un signal de courant (ID) du transformateur de courant continu (GÜ) et un courant de consigne (IS), la valeur de consigne (IS) du courant étant formée en fonction d'une puissance (PS) devant être transmise au transformateur de courant continu (GÜ).

13. Montage suivant l'une des revendications 7 à 12, dans lequel le transformateur de courant continu (GÜ) est constitué sous la forme d'un transformateur de courant continu à haute tension.
